(19) Europäisches Patentamt
European Patent Office
Office européen des brevets

(11) Publication number: 0 047 283
B1

(12) EUROPEAN PATENT SPECIFICATION

(45) Date of publication of patent specification: 18.07.84

(51) Int. Cl.³: B 01 F 17/22, C 08 G 69/44, C 09 D 17/00

(21) Application number: 81900659.4

(22) Date of filing: 27.02.81

(86) International application number: PCT/DK81/00024

(87) International publication number: WO 81/02395 03.09.81 Gazette 81/21

# (54) POLYMERIC DISPERSING AGENT, METHODS OF PREPARING THE SAME AND DISPERSION CONTAINING SAID DISPERSING AGENT.

(30) Priority: 28.02.80 DK 857/80

(43) Date of publication of application: 17.03.82 Bulletin 82/11

(45) Publication of the grant of the patent: 18.07.84 Bulletin 84/29

(84) Designated Contracting States: GB

(56) References cited:
DE - A - 1 620 899
DE - A - 1 719 424
DE - A - 2 249 254
DE - A - 2 310 048
DE - A - 2 434 147
DE - A - 2 541 483
DE - A - 2 830 860
GB - A - 1 116 207
GB - A - 1 268 749
SE - B - 325 279
US - A - 3 475 385
US - A - 3 538 058
US - A - 3 554 983
US - A - 3 996 059

(73) Proprietor: SADOLIN & HOLMBLAD A/S
4, Industrigrenen
DK-2635 Ishoj (DK)

(72) Inventor: GULEV, Niels Oscar
Klirevaenget 24
DK-2880 Bagsvaerd (DK)
Inventor: CANESTRI, Giuseppe
Fridtjof, Nansens Plads 3
DK-2100 Kobenhavn O (DK)

(74) Representative: Patentanwälte Leinweber & Zimmermann
Rosental 7/II Aufg.
D-8000 München 2 (DE)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

EP 0 047 283 B1

Courier Press, Leamington Spa, England.

## Description

This invention relates to a polymeric dispersing agent for use for dispersing solid particles in an organic liquid and more particularly a dispersing agent for use in dispersing pigments in organic liquids so as to form printing inks including printing ink concentrates.

GB—A—1 342 746 describes pigment-containing dispersions containing as a dispersion agent one or more polyesters or polyester salts, the polyester being derived from a hydroxycarboxylic acid having a hydrocarbon group containing at least 8 carbon atoms and in which there are at least 4 carbon atoms between the hydroxy and carboxylic acid groups, or from a mixture of such a hydroxycarboxylic acid and a carboxylic acid which is free from hydroxy groups.

DE—A—2 830 860 describes a polymeric dispersing agent containing amide bonds and polyester chains.

Pigments for the preparation of printing inks can be grouped in "acidic", "basic", "amphoteric" and "neutral" pigments (Palle Sørensen: "Application of the Acid/Base Concept", Journal of Paint Technology, volume 47, No. 602, March 1975, pages 31—38).

The above mentioned prior art dispersing agent is suitable for the preparation of dispersions containing specially composed and in particular diazotized and coupled pigments including red pigments but is unable to form satisfactory dispersions of certain "acidic" pigments including special black and blue pigments. Furthermore, due to the strongly polar and surface active character of the above-mentioned prior art dispersing agent it is only suitable for the preparation of dispersions which subsequently are to be used in rotogravure and letterpress printing inks, whereas it is unsuitable for use in lithographic printing inks which during the printing operation are brought into intimate contact with water.

The object of the invention is to provide a dispersing agent which is particularly suitable for the preparation of the dispersions of particles of an "acidic" character, such as certain pigments for the preparation of high quality lithographic printing inks.

This object is achieved with the dispersing agent according to the invention, said dispersing agent consisting essentially of an oligo or polyamide chain in which all nitrogen atoms are part of amide bonds and that the oligo or polyamide chain is connected with at least one polymeric chain, each polymeric chain having a molecular weight of at least 1000, and wherein free carboxylic acid groups, if any, present in the polymeric chain or chains optionally are converted into amides or esters.

The invention is based on the discovery that the oligo or polyamide chain which is of basic character shows a high affinity to particles of "acidic" character, such as pigments, and are capable of effectively dispersing such particles in an organic liquid.

As mentioned above the dispersing agent according to the invention consists essentially of an oligo or polyamide chain which is connected with one or more polymer chains.

The oligo or polyamide chain preferably comprises in average from 2 to 36 amide bonds per molecule.

The polymer chain or chains which are connected with the oligo or polyamide chain preferably are polyester chains having a molecular weight of at least 1500. Examples of other suitable types of polymer chains are homopolymers of butadiene and styrene-butadiene copolymers. Polymers of the above mentioned type and being hydroxy terminated are commercially available under the trade mark "poly bd resins" (ARCO Chemical Company).

Another suitable type of polymers is carboxy terminated polybutadienes which are commercially available under the trade mark "Hycar CT" (B.F. Goodrich Chemical Company, U.S.A.).

As indicated above the dispersing agents may also contain small amounts of other compounds than the above mentioned polymers. As explained below such compounds may originate from "impurities" in the starting materials used in the preparation of the polymeric dispersing agent.

The dispersing agent according to the invention may be prepared in several ways which are well known per se.

Thus, the dispersing agent can be prepared by reacting an amine containing at least two amino groups with an amino acid and by optionally reacting the reaction product thus formed with a dicarboxylic acid and by reacting the compound thus formed with a hydroxycarboxylic acid capable of forming a polyester.

Free carboxylic acid groups which optionally may be present in the polymer formed may subsequently be converted into amido groups with a base or may be esterified.

The amine used is preferably a diamine having the formula

$$R^1HN—R—NHR^2,$$

wherein R is a divalent hydrocarbon group containing between 1 and 20 carbon atoms and wherein $R^1$ and $R^2$ each is a hydrogen atom or a saturated or unsaturated hydrocarbon group containing from 1 to 20 carbon atoms. Examples of such diamines are ethylenediamine, 1,2-propanediamine, 1,6-hexanediamine, 1,8-octanediamine, 1,12-dodecanediamine, 1,4-diaminocyclohexane and 1,4-phenylenediamine.

The amino acid used is preferably an amino acid having the formula:

$$R^4HNR^5COOH$$

wherein $R^4$ is a hydrogen atom or a hydrocarbon group containing 1—20 carbon atoms and $R^5$ is a hydrocarbon group containing from 1 to 20 carbon atoms and optionally being substituted. Examples of such amino acids are glycine, $\alpha$-alanine, glutamic acid, arginine and 11-aminoundecane acid.

The dicarboxylic acid which optionally is used in the above mentioned method is for example succinic acid, adipic acid, azelaic acid, sebacic acid, 1,12-dodecanedioic acid, 1,2-cyclohexanedicarboxylic acid, 1,4-cyclohexanedicarboxylic acid and terephthalic acid.

Examples of hydroxycarboxylic acids for use in the above mentioned method are 12-hydroxystearic acid and ricinolic acid. Other examples of suitable hydroxy carboxylic acids are disclosed in GB—A—1 342 746.

The commercially available hydroxycarboxylic acids often contain a small amount of a carboxylic acid which is free from hydroxy groups and the final product may thus contain some "impurities". Such "impurities" ordinarily have no significant adverse effect on the dispersing activity of the product provided they are present in small amounts. If they are present in larger amounts, special precautions should be taken to remove said "impurities" or to convert them into amides or esters.

The reaction of the above mentioned compounds is preferably effected while stirring, under an inactive gas and at a temperature of about 100°C in an aromatic solvent, e.g. xylene, and the water formed during the reaction is preferably removed by azeotropic distillation.

When converting free carboxylic acids present in the polyester chain or chains and carboxylic acids originating from the above mentioned "impurities" into amides, a diamine of the above mentioned type is preferably used.

In another method of preparing the dispersing agent according to the invention an amine containing at least two amino groups is reacted with a dicarboxylic acid and the oligo or polyamide thus formed is subsequently reacted with a hydroxycarboxylic acid capable of forming a polyester so as to form a polymer and free carboxylic acid groups, if any, are subsequently converted into amido groups with a base or are esterified. The amine used is preferably a diamine of the same type as the diamine used in the first method described above. The same applies to the dicarboxylic acid and the hydroxycarboxylic acid.

A diamine of the above mentioned type is preferably used to form the above mentioned amido groups.

The reaction is preferably effected while stirring under an inactive gas and at a temperature of above 100°C in an aromatic solvent, e.g. xylene, and the water formed during the reaction is preferably removed by azeotropic distillation.

The invention also relates to a dispersion of solid particles in an organic liquid containing a dispersing agent of the above mentioned type.

Such a dispersion can be prepared by well known methods for the preparation of dispersions. Thus the solid particles, e.g. pigment particles, the organic liquid and the dispersing agent according to the invention may be mixed in any sequence and the mixture may then be subjected to a mechanical treatment to break down agglomerates, if any, of solid particles, e.g. by ball-milling or roller-milling.

The solid substance may also be milled alone or in admixture with either the organic liquid or the dispersing agent and the other component(s) may then be added, whereafter the dispersion is formed by stirring of the mixture.

The amount of dispersing agent is dispersions according to the invention is preferably from 1 to 20% by weight and more preferably from 5 to 15% by weight based on the weight of the solid particles and the dispersions preferably contain from 40 to 60% by weight of solid particles based on the total weight of the dispersion.

The organic liquids used for the preparation of said dispersions may be inert organic liquids in which the dispersing agent is at least partially soluble at room temperature and which are stable under the conditions at which the dispersions are to be used. If desired, mixtures of organic liquids may be used. Preferred organic liquids are hydrocarbons and halogenated hydrocarbons, such as toluene, xylene, white spirit, chlorobenzene, carbon tetrachloide and perchloroethylene. Also other organic liquids can be used, for example esters, such as butyl acetate, alcohols, such as n-butanol, and linseed oil, the viscosity of which optionally is increased by heat treatment. It is particularly preferred to use petroleum fractions. In general the selection of the organic liquids or mixtures thereof used for the preparation of the dispersions will depend on the uses to which the dispersions are to be put.

As mentioned above the solid particles preferably are pigment particles. In case of inorganic pigments, these are preferably such which contain a metal atom, and as examples of such pigments there may be mentioned titanium dioxide, prussin blue, cadmium sulphide, iron oxides, vermillon, ultramarine and chrome pigments including chromates of lead, zinc, barium and calcium and mixtures and modifications thereof. Such pigments are commercially available as greenish-yellow to red pigments under the names primrose, lemon, middle, orange, scarlet and red chromes.

The organic pigments are preferably water-insoluble metal salts or complexes, particularly calcium or barium salts or complexes of soluble or sparingly soluble organic dyes, especially azodyes and phthalocyanines.

Other examples of suitable pigments are for example described in the third edition of Colour Index (1975).

The dispersions according to the invention are fluid or semi-fluid compositions containing the solid in finely divided and usually deflocculated form and they can be used for any purpose for which the dispersions of such solids are conventionally used. Dispersions of pigments are of particular use in the manufacture of printing inks by admixing the dispersions with other components conventionally used in the manufacture of such inks. The dispersions are also of value in the manufacture of paints in which they may be admixed with e.g. conventional alkyd and/or other resins.

The invention will be described in further detail by the following examples:

Example 1

A mixture of 400 g (2 moles) of 1,12-diaminododecane and 690 g (3 moles) of 1,2-dodecanedioic acid is heated while stirring in a 10 litres glass flask under an atmosphere of nitrogen to 190°C and is maintained at said temperature for about 2,5 hours until 4 moles of water have been formed. The water thus formed is removed azeotropically by means of xylene. The resulting oligo amide which contains 2 free end-terminating acid groups is then reacted with 6000 g (about 20 moles) of 12-hydroxystearic acid at 220°C for 24 hours so as to form 20 moles of water. The water thus formed is removed azeotropically with xylene. The acid number is determined (between 10 and 20) and 1,2-diaminododecane is added in an amount which is equal to 1,1 times the equivalent amount while heating to 220°C until the water generation is terminated.

The xylene is removed in vacuum at 190°C.

The product thus obtained is a brownish highly viscous mass having an acid number of 0 mg KOH/g and being soluble in aromates and aromate-containing liquids.

Example 2

A mixture of 200 g (1 mole) of 1,12-diaminododecane and 402 g (2 moles) of 11-aminoundecane acid is reacted at 190°C while removing 2 moles of reaction water. Subsequently 460 g (2 moles) of 1,12-dodecanedioic acid are added and the temperature is raised to 200°C. This temperature is maintained until 2 additional moles of water have been formed and removed azeotropically with xylene. Subsequently 6000 g (about 20 moles) of ricinolic acid ("Nouracid CS 80" from Akzo Chemie) are added and the temperature is maintained at 200°C for 48 hours, whereby 20 moles of esterification water are formed and removed azeotropically.

The acid number is measured, and the equivalent amount of alkylpropylenediamine ("Duomeen T" (Trade Mark) from Armour Hess Chemicals Ltd.) is added. The temperature is maintained at 200°C for 2 hours or until no more reaction water is formed.

The xylene is removed by distillation at 190°C under vacuum.

The product thus obtained is a brownish highly viscous mass having an acid number of 3 mg KOH/g and is soluble in toluene.

Example 3

A reaction vessel having a volume of 700 litres and made from stainless steel is filled with 28.1 kg alkylpropylenediamine ("Duomen T") and 31.4 kg 11-aminoundecane acid. After addition of 100 kg of xylene, stirring is started and the contents are heated to 143°C at which temperature the xylene is refluxing.

From the start to the end of the process nitrogen is bubbled through the reaction mixture. After 1 hour at 143°C 46.5 kg "Nouracid CS 80" containing 87% ricinolic acid are added and the temperature is raised to 195°C at which it is maintained until no more reaction water is formed. The reaction water is removed azeotropically with xylene.

Subsequently 465.8 kg "Nouracid CS 80" are added and the temperature is maintained at 195°C for 8 hours, at 220°C for 8 hours and at 240°C for 8 hours. Subsequently 28.1 kg "Duomen T" are slowly added to neutralize the free acid groups and to form amides, and the reaction is continued at 240°C until no more reaction water is formed. The total amount of water formed is 33 kg.

After cooling to 195°C xylene is removed by distillation under vacuum.

The final product is a dark brown transparent highly viscous gel-like mass having an acid number of 0 mg KOH/g.

The product is soluble in pure aromates and aromate-containing mineral oils.

Example 4

8.5 parts of the product prepared according to Example 3 are dissolved in 41.5 parts of mineral oil (containing 22% aromates and having a boiling range of 260—290°C) and 50 parts of carbonblack (pH=3—5) are admixed with a slowly moving stirrer. After 30 minutes of predispersing the dispersion is milled once in a 3-roller mill.

The dispersion thus obtained is fluid and contains carbonblack in finely divided and deflocculated state and is excellently suitable for use in e.g. paints, lacquers and printing inks including lithographic printing inks.

Example 5

The method according to Example 4 is repeated except that 50 parts of litholrubin, C.I. pigment red No. 57 (15850) are used instead of the carbon black.

The product obtained is a liquid dispersion in which the pigment is finally divided. The dispersion is suitable for the same purposes as the dispersion according to Example 4.

Example 6

The method according to Example 4 is repeated except that the pigment used is 50 parts of a yellow pigment, C.I. pigment yellow No. 13 (21100) are used.

The product obtained is a liquid dispersion in which the pigment is finely divided. The dispersion is suitable for the same purposes as the dispersion according to Example 4.

Example 7

The method according to Example 4 is repeated except that the pigment used is 50 parts of β-Cu-phthalocyanine blue, C.I. pigment blue No. 15.4 (74160).

The result obtained corresponds to that obtained according to Example 5.

Example 8

The method according to Example 4 is repeated except for the use of 10 parts of the product prepared according to Example 3, 5 parts of mineral oil and 85 parts of titaniumdioxide ("R/U/F" from Bayer A.G.).

The dispersion obtained is liquid and contains titaniumdioxide in finely divided and deflocculated state. The dispersion is suitable for the same purposes as the dispersion according to Example 4.

Example 9

A mixture of 2880 g (8 moles) of alkylpropylenediamine ("Duomen T"), 1610 g (7 moles) of 1,12-dodecanedioic acid and 402 g (2 moles) of 11-aminoundecane acid is reacted at 220°C while removing 16 moles of esterification water. 6600 g (about 22 moles) of ricinolic acid are added to the polyamide formed (containing on average 16 amido groups per molecule) and the components are reacted at 200°C for 48 hours. 400 g (about 22 moles) of esterification water are formed and the water formed is removed azeotropically with xylene. The acid number of the products obtained is 22 mg KOH/g. 460 g (2.3 moles) of 1,2-diaminododecane are added and the mixture is reacted at 220°C until no more reaction water is formed. The acid number is 0.5 mg KOH/g.

The product obtained is tested as described in Example 4. A similar result is obtained.

Example 10

a) A mixture of 360 g of alkylpropylenediamine ("Duomen T"), 402 g of 11-aminoundecane acid and 50 g of xylene is heated while stirring in a 1 litre glass flask while removing reaction water azeotropically with xylene. The temperature is gradually raised to 250°C and is maintained at 250°C until no more water is generated, 36 ml of water are formed. The xylene is then removed at 180°C under vacuum.

The product thus formed is a diamide having free amino groups and is white and has a melting point of about 50°C.

b) 4800 g of liquid carboxyl-terminated polybutadiene ("Hycar CTB" from B. F. Goodrich Chemical Company, U.S.A.) having an acid equivalent weight of 2400 and a functionality of 2.01, 327 g of behenyl alcohol, 5 g of hydroquinonemonomethylether and 5 g of dibutyltinoxide are reacted at 210°C until no more reaction water is formed. The esterified product is a monofunctional compound having a measured acid equivalent weight of 4561.

c) 1820 of the esterification product prepared as described under b) are reacted with 145 g of the diamide prepared as described under a) at 220°C until no more reaction water originating from the amide formation resulting from the reaction between the amino groups of the diamide and the carboxylic acid groups of the esterified product is formed.

Subsequently 490 g of mineral oil (boiling range 230—260°C and containing 18% aromates) are added.

At room temperature the product thus obtained is a dark brown highly viscous waxlike paste which is soluble in aromates and aromate-containing mineral oils.

10 parts of said product are dissolved in 45 parts of mineral oil (boiling range 230—260°C and containing 18% aromates) and 45 parts of β-Cu-phthalocyanine blue are admixed. The mixture thus obtained is liquid and is milled twice on a 3-roller mill so as to form a mixture containing the pigment in finely divided and deflocculated state.

## Claims

1. A polymeric dispersing agent for use in dispersing solid particles in an organic liquid, said dispersing agent comprising an oligo or polyamide chain, characterised in that all nitrogen atoms of said oligo or polyamide chain are part of amide bonds and that the oligo or polyamide chain is connected with at least one polymeric chain, each polymeric chain having a molecular weight of at least 1000, and wherein free carboxylic acid groups, if any, present in the polymeric chain or chains optionally are converted into amides or esters.

2. A polymeric dispersing agent according to claim 1, characterized in that the oligo or polyamide chain comprises on average between 2 and 36 amido bonds per molecule.

3. A polymeric dispersing agent according to claim 1, characterized in that the polymer chain(s) connected with the oligo or polyamide chain are polyester chains having a molecular weight of at least 1500.

4. A polymeric dispersing agent according to claim 1, characterized in that the oligo or polyamide chain contains segments formed by reaction of amino acids.

5. A polymeric dispersing agent according to claim 4, characterized in that the segments are formed by reacting 11-aminoundecane acid or arginine.

6. A method of preparing a dispersing agent according to claim 1, wherein the polymer chains are polyester chains, characterized in that an amine containing at least 2 amino groups is reacted with an amino acid, that the reaction product thus formed is optionally reacted with a dicarboxylic acid, that the product thus obtained is reacted with a hydroxycarboxylic acid capable of forming a polyester and that free carboxylic acid groups, if any, are converted into amido groups with a base or into ester groups.

7. A method of preparing the dispersing agent according to claim 1, wherein the polymer chains are polyester chains, characterized in that an amine containing at least two amino groups is reacted with a dicarboxylic acid and that the oligo or polyamide thus formed is reacted with a hydroxycarboxylic acid capable of forming a polyester and that free carboxylic acid groups, if any, are converted into amido groups with a base or into ester groups.

8. A method according to claim 6 or 7, characterized in that the carboxylic acid groups are converted into amido groups with a diamine.

9. A method according to claim 6 or 7, characterized in that the reaction is carried out under stirring and under an inactive gas and at a temperature of about 100°C in an aromatic solvent.

10. A dispersion of solid particles in an organic liquid containing a polymeric dispersing agent comprising an oligo or polyamide chain characterised in that all nitrogen atoms of said oligo or polyamide chain are part of amido bonds and that the oligo or polyamide chain is connected with at least one polymeric chain, each polymeric chain having a molecular weight of at least 1000, and wherein free carboxylic acid groups, if any, present in the polymeric chain or chains optionally are converted into amides or esters.

11. A dispersion according to claim 10, characterized in that it contains from 1 to 20% by weight of the dispersion agent based on the weight of the solid particles.

**Patentansprüche**

1. Polymeres Dispergiermittel zur Verwendung beim Dispergieren fester Teilchen in einer organischen Flüssigkeit, wobei das Dispergiermittel eine Oligo- oder Polyamid-Kette aufweist, dadurch gekennzeichnet, daß alle Stickstoffatome der Oligo- oder Polyamid-Kette Teil von Amidbindungen sind und daß die Oligo- oder Polyamid-Kette mit wenigstens einer polymeren Kette verbunden ist, wobei jede polymere Kette ein Molekulargewicht von wenigstens 1000 hat, und worin, wenn überhaupt, in der polymeren Kette oder Ketten vorhandene freie Carbonsäuregruppen gegebenenfalls in Amide oder Ester umgewandelt sind.

2. Polymeres Dispergiermittel nach Anspruch 1, dadurch gekennzeichnet, daß die Oligo- oder Polyamid-Kette durchschnittlich zwischen 2 und 36 Amidbindungen pro Molekül aufweist.

3. Polymeres Dispergiermittel nach Anspruch 1, dadurch gekennzeichnet, daß die mit der Oligo- oder Polyamid-Kette verbundene(n) polymere(n) Kette(n) Polyesterketten mit einem Molekulargewicht von wenigstens 1500 sind.

4. Polymeres Dispergiermittel nach Anspruch 1, dadurch gekennzeichnet, daß die Oligo- oder Polyamid-Kette durch Reaktion von Aminosäuren gebildete Segmente enthält.

5. Polymeres Dispergiermittel nach Anspruch 4, dadurch gekennzeichnet, daß die Segmente durch Umsetzen von 11-Aminoundecansäure oder Arginin gebildet sind.

6. Verfahren zur Herstellung eines Dispergiermittels nach Anspruch 1, worin die Polymerketten Polyesterketten sind, dadurch gekennzeichnet, daß ein wenigstens 2 Aminogruppen enthaltendes Amin mit einer Aminosäure umgesetzt wird, daß das so gebildete Reaktionsprodukt gegebenenfalls mit einer Dicarbonsäure umgesetzt wird, daß das so erhaltene Produkt mit einer zur Bildung eines Polyesters fähigen Hydroxycarbonsäure umgesetzt wird und daß freie Carbonsäuregruppen, wenn überhaupt, mit einer Base in Amidogruppen oder in Estergruppen umgewandelt werden.

7. Verfahren zur Herstellung des Dispergiermittels nach Anspruch 1, worin die Polymerketten Polyesterketten sind, dadurch gekennzeichnet, daß ein wenigstens 2 Aminogruppen enthaltendes Amin mit einer Dicarbonsäure umgesetzt wird und daß das so gebildete Oligo- oder Polyamid mit einer zur Bildung eines Polyesters fähigen Hydroxycarbonsäure umgesetzt wird und daß freie Carbonsäuregruppen, wenn überhaupt, mit einer Base in Amidgruppen oder in Estergruppen umgewandelt werden.

8. Verfahren nach Anspruch 6 oder 7, dadurch gekennzeichnet, daß die Carbonsäuregruppen mit einem Diamin in Amidgruppen umgewandelt werden.

9. Verfahren nach Anspruch 6 oder 7, dadurch gekennzeichnet, daß die Umsetzung unter Rühren und unter einem inaktiven Gas und bei einer Temperatur von über 100°C in einem aromatischen Lösungsmittel durchgeführt wird.

10. Dispersion fester Teilchen in einer organischen Flüssigkeit, enthaltend ein polymeres Dispergiermittel, das eine Oligo- oder Polyamid-Kette aufweist, dadurch gekennzeichnet, daß alle Stickstoffatome der Oligo- oder Polyamid-Kette Teil von Amidbindungen sind und daß die Oligo- oder Polyamid-Kette mit wenigstens einer polymeren Kette verbunden ist, wobei jede polymere Kette ein Molekulargewicht von wenigstens 1000 hot, und worin, wenn überhaupt, in der polymeren Kette oder Ketten vorhandene freie Carbonsäuregruppen gegebenenfalls in Amide oder Ester umgewandelt werden.

11. Dispersion nach Anspruch 10, dadurch gekennzeichnet, daß sie 1 bis 20 Gewichtsprozent des Dispergiermittels, bezogen auf das Gewicht der festen Teilchen, enthält.

**Revendications**

1. Agent dispersant polymère à utiliser pour disperser des particules solides dans un liquide organique, ledit agent dispersant comprenant une chaîne oligo ou polyamide, caractérisé en ce que tous les atomes d'azote de ladite chaîne oligo ou polyamide font partie des liaisons amide et en ce que la chaîne oligo ou polyamide est connectée à au moins une chaîne polymère, chaque chaîne polymère ayant un poids moléculaire d'au moins 1000 et en ce que des groupes acide carboxylique libres s'il y en a, présents dans la ou les chaînes polymères sont éventuellement convertis en amides ou esters.

2. Agent dispersant polymére selon la revendication 1, caractérisé en ce que la chaîne ologo ou polyamide comprend, en moyenne, entre 2 et 36 liaisons amido par molécule.

3. Agent dispersant polymère selon la revendication 1, caractérisé en ce que la ou les chaînes de polymère connectées à la chaîne oligo ou polyamide sont des chaînes de polyester ayant un poids moléculaire d'au moins 1500.

4. Agent dispersant polymère selon la revendication 1, caractérisé en ce que la chaîne oligo ou polyamide contient des segments formés par réaction d'amino-acides.

5. Agent dispersant polymère selon la revendication 4, caractérisé en ce que les segments sont formés par réaction d'acide 11-aminoundécane ou d'arginine.

6. Méthode de préparation d'un agent dispersant selon la revendication 1, où les chaînes de polymère sont des chaînes de polyester, caractérisée en ce que l'on fait réagir une amine contenant au moins deux groupes amino avec un aminoacide, en ce que l'on fait éventuellement réagir le produit réactionnel ainsi formé avec un acide dicarboxylique, en ce que l'on fait réagir le produit ainsi obtenu avec un acide hydroxycarboxylique pouvant former un polyester et en ce que les groupes acide carboxylique libres, s'il y en a, sont convertis en groupes amido avec une base ou en groupes ester.

7. Méthode de préparation de l'agent dispersant selon la revendication 1, où les chaînes de polymère sont des chaînes de polyester, caractérisée en ce que l'on fait réagir une amine contenant au moins deux groupes amino avec un acide dicarboxylique et en ce que l'on fait réagir l'oligo ou polyamide ainsi formé avec un acide hydroxycarboxylique pouvant former un polyester et en ce que les groupes acide carboxylique libres, s'il y en a, sont convertis en groupes amido avec une base ou en groupes ester.

8. Méthode selon la revendication 6 ou 7, caractérisée en ce que les groupes acide carboxylique sont convertis en groupes amido avec une diamine.

9. Méthode selon la revendication 6 ou 7, caractérisée en ce que la réaction est mise en oeuvre sous agitation et sous un gaz inactif à une température supérieure à 100°C dans un solvant aromatique.

10. Dispersion de particules solides dans un liquide organique contenant un agent dispersant polymére comprenant une chaîne oligo ou polyamide, caractérisée en ce que tous les atomes d'azote de ladite chaîne oligo ou polyamide font partie des liaisons amido et en ce que la chaîne oligo ou polyamide est connectée à au moins une chaîne polymère, chaque chaîne polymère ayant un poids moléculaire d'au moins 1000 et en ce que des groupes acide carboxylique libres, s'il y en a, présents dans la ou les chaînes polymère sont éventuellement convertis en amides ou esters.

11. Dispersion selon la revendication 10, caractérisée en ce qu'elle contient de 1 à 20% en poids de l'agent de dispersion en se basant sur le poids des particules solides.